# FASCICULE DE BREVET EUROPEEN

(11) **EP 1 717 477 B1**
(45) Date de publication et mention de la délivrance du brevet: **23.02.2011**
(21) Numéro de dépôt: 06112571.2
(22) Date de dépôt: 12.04.2006
(51) Int. Cl.: F16F 1/36, F16F 1/38

(54) **Dispositif permettant de réaliser des supports anti-vibratoires**
Vorrichtung zur Herstellung von Antischwingungslager
Device for producing antivibration mounts

(30) Priorité: 29.04.2005 ES 200501055
(43) Date de publication de la demande: 02.11.2006
(73) Titulaire: MAIZTARKOETXEA, S.L., 20008 SAN SEBASTIAN- Guipuzcoa (ES)
(72) Inventeur: Lopetegui, Ignacio, 20008, San Sebastian-Guipuzcoa 20008 (ES)
(74) Mandataire: Intès, Didier Gérard André

(56) Documents cités:
- EP-A- 1 574 739
- WO-A-02/50450
- WO-A-03/091594
- GB-A- 1 058 793
- US-A- 3 506 233

## Description

### DOMAINE DE L'INVENTION

La présente invention concerne un dispositif destiné à permettre la création d'une grande variété de supports utilisés pour le support de machines ou pour la suspension d'appareils à air conditionné, de ventilation de réfrigération, pour le soutien de faux-plafonds et d'autres applications similaires.

### ETAT DE LA TECHNIQUE ANTERIEURE

Traditionnellement, les supports anti-vibratoires connus sont composés d'une structure métallique rigide, ou support métallique, qui possède des moyens permettant de l'ancrer à un sol ou à un toit, avec une masse élastique qui est placée dans ce support métallique et qui présente une capacité d'absorption des vibrations ; avec la particularité qui est que ladite masse élastique est un ensemble, ou bloc, d'une seule pièce qui est obtenue par l'intermédiaire d'un procédé d'injection ou de moulage plastique.

Avec ce type de réalisation, le support anti-vibratoire absorbe seulement les vibrations selon son axe principal (généralement l'axe vertical) et son travail n'offre pas de comportements différents de ceux correspondant aux caractéristiques du matériau qui le constitue ; de telle sorte que pour chaque matériau présentant des caractéristiques déterminées, le comportement sera toujours le même.

Un autre exemple connu de support anti-vibratoire est divulgué dans la demande PCT n° WO 03/091594 A1.

### EXPLICATION DE L'INVENTION ET AVANTAGES

Face à cet état des choses, l'invention a pour objet un dispositif de support, anti-vibratoire, selon la revendication 1. Ce dispositif est constitué d'une structure métallique rigide, ou support métallique, qui possède des moyens permettant de l'ancrer à un sol ou un toit, avec une masse élastique qui est logée dans ce support métallique et qui présente une capacité d'absorption des vibrations ; dans lequel ladite masse élastique est désormais constituée d'une ou plusieurs pièces horizontales et/ou verticales qui sont profilées avec une géométrie adaptée à chaque application et qui sont obtenues par l'intermédiaire d'opérations de coupe ou de forçage à partir de planches constituées d'un matériau élastomère microcellulaire, ces planches possèdant des caractéristiques élastiques variées et offrant une large gamme de rigidités, et dans lequel il existe des cloisons métalliques qui sont intercalées entre certaines planches ou toutes les planches qui sont contiguës aux pièces horizontales et/ou verticales.

Cette conception proposée permet d'obtenir des configurations de la masse élastique réalisées au fur et à mesure des besoins d'absorption des vibrations prévues dans chaque cas d'application du support anti-vibratoire ; de façon à obtenir des degrés de rigidité différents dans des directions spatiales différentes ou de rigidité progressive selon la sollicitation. De ce fait, la masse élastique est réalisée en couches en jouant sur la diversité des qualités de la planche du matériau élastomère microcellulaire de départ, ainsi que sur une grande liberté de créer des géométries qui peuvent s'adapter à tout support, aussi bien pour faire des combinaisons dans une forme déterminée de support, que pour des formes de supports inhabituelles qui, avec les procédés actuels de moulage par injection ou d'autres modes, nécessitent la réalisation préalable d'un moule coûteux dans lequel, par ailleurs, on ne peut utiliser qu'une seule et même qualité de matériau et on ne peut pas former des couches de qualités différentes qui peuvent donner des réponses différentes selon l'application à chaque instant.

Après avoir établi que la présente invention peut être appliquée à des supports de n'importe quelle géométrie, dans ce qui suit, nous présenterons certains modes de réalisation préférés qui concernent un support de configuration cylindrique en forme de cuvette. Dans ce cas, selon l'invention, lesdites pièces horizontales et/ou verticales sont des plaques annulaires de rigidités différentes qui, en formant une ou plusieurs couches, sont montées entre une paroi cylindrique de ce support métallique et un noyau métallique creux qui est également cylindrique ; un autre mode de réalisation préféré est caractérisé en ce que les pièces horizontales et/ou verticales sont des anneaux concentriques de rigidités différentes qui, en formant une ou plusieurs couches, sont installés successivement entre une paroi cylindrique de ce support métallique et un noyau métallique creux qui est également cylindrique ; une autre option est que lesdites pièces horizontales et/ou verticales sont des secteurs annulaires de différentes rigidités qui sont installés en formant une ou plusieurs couches entre une paroi cylindrique dudit support métallique en forme de cuvette et un noyau métallique creux qui est également cylindrique. Avec ces trois types de configuration, il est possible de faire autant de combinaisons que nécessaire : plusieurs couches d'un même type de configuration (plaques annulaires, anneaux concentriques, secteurs annulaires) mais avec des rigidités différentes ; une ou plusieurs couches combinant des configurations et/ou des rigidités variées, aussi bien à l'intérieur d'une même couche que dans des couches différentes.

D'après ce qui a été dit, il semble évident que cette invention permet la fabrication de supports anti-vibratoires qui offrent une rigidité différente dans une direction spatiale par rapport à une autre ; de la même manière, il est possible de faire en sorte que, dans une direction spatiale déterminée, la rigidité varie en fonction de l'intensité de l'effort reçu ; il est même possible qu'un même support anti-vibratoire offre une rigidité différente dans une direction spatiale ou une autre. A ce sujet, il faut mentionner tout spécialement que la présente invention permet l'absorption de vibrations non seulement dans des directions spatiales linéaires mais aussi dans une direction sinueuse ; à cet effet, l'invention a pour objet une particularité qui est que le noyau métallique forme, au moins, une cloison radiale qui s'étend entre deux secteurs annulaires successifs ; ou bien que le support métallique forme, au moins, une cloison radiale qui s'étend entre deux secteurs annulaires ; ou, bien entendu, une combinaison des deux possibilités ; de telle sorte que, lorsqu'un support constitué de ces éléments est soumis à des efforts de torsion, il offre une rigidité qui est capable d'absorber les vibrations dues à ces derniers.

Pour structurer la composition multicouche à l'intérieur du support cylindrique en forme de cuvette, une autre particularité de l'invention consiste en ce que le noyau métallique forme, au moins, une cloison transversale qui s'étend entre deux couches de matériau élastomère microcellulaire, chacune d'elles en forme de plaques annulaires, ou d'anneaux concentriques, ou de secteurs annulaires, ou d'une possible combinaison de ces différents éléments ; de la même manière, le support métallique forme, au moins, une cloison transversale qui s'étend entre deux couches de matériau élastomère microcellulaire, chacune d'elles en forme de plaques annulaires, ou d'anneaux concentriques, ou de secteurs annulaires, ou d'une possible combinaison de ces différents éléments ; bien entendu, les deux solutions peuvent être combinées sur un même support anti-vibratoire.

L'élastomère microcellulaire utilisé dans cette invention présente la propriété d'être compressible en volume et, de ce fait, peut être déformé même lorsqu'il est emboîté dans une cavité fermée, ce qui lui confère une rigidité sur le plan horizontal et sur le plan vertical qui se traduit par sa capacité à absorber des vibrations.

Par ailleurs, l'utilisation du matériau sous forme de planche qui peut être découpé, ou coupé au jet d'eau, économise non seulement la fabrication d'un moule coûteux, mais permet également d'obtenir une augmentation conséquente de la productivité.

### SCHEMAS ET REPERES

Afin de mieux comprendre la nature de l'invention, un mode de réalisation industriel préféré est représenté de manière illustrative mais non limitative dans les schémas ci-joints.
La figure 1 est une vue en perspective qui représente un mode de réalisation de l'invention qui concerne un support métallique (1) en forme de cuvette cylindrique, auquel on a enlevé un quadrant afin de montrer clairement la structure interne.
Les figures 2 et 3 sont semblables à la figure 1, mais concernent chacune d'autres modes de réalisation de l'invention.
La figure 4 est une vue de dessus d'un mode de réalisation tel que celui de la figure 3.
La figure 5 est une variante de réalisation de la figure 1 dans laquelle les trois couches présentent des éléments qui les séparent les unes des autres, puisqu'ils constituent chacun des cloisons transversales (4, 6) du support métallique (1) et du noyau métallique (3).
La figure 6 est un support métallique (1) comme celui de la figure 1, mais qui représente une réalisation avec des cloisons radiales (5, 7) du support métallique (1) et du noyau métallique creux (3). Sur cette figure 6, le support métallique (1) est dans une position inversée, en référence à son application pour le soutien de faux-plafonds.
La figure 7 est une vue qui représente en perspective un support métallique (1) en forme de fourche de soutien de faux-plafonds.
La figure 8 est une vue en projection orthogonale qui correspond à la section V-V repérée sur la figure 7.

Sur ces figures, les repères indiqués sont les suivants :
1.- Support métallique
2.- Masse élastique
3.- Noyau métallique creux
4.- Cloison transversale du support métallique (1)
5.- Cloison radiale du support métallique (1)
6.- Cloison transversale du noyau métallique creux (3)
7.- Cloison radiale du noyau métallique creux (3)
8.- Plaque annulaire de la masse élastique (2)
9.- Anneaux concentriques de la masse élastique (2)
10.- Secteurs annulaires de la masse élastique (2)
11.- Ailettes de la masse élastique (2)

### DESCRIPTION D'UN MODE DE REALISATION PREFERE

En référence aux schémas et aux repères énumérés ci-dessus, plusieurs modes de réalisation préférés de l'objet de l'invention sont représentés sur les plans ci-joints, qui concernent un dispositif permettant de créer des supports anti-vibratoires qui sont composés d'une structure métallique rigide, ou support métallique (1), qui présente des moyens permettant de l'ancrer à un sol ou à un toit, avec une masse élastique qui est placée dans ce support métallique (1) et qui présente une capacité d'absorption des vibrations.

Selon l'invention, ladite masse élastique (2) présente un trou central traversant et est constituée d'une ou plusieurs pièces horizontales et/ou verticales qui sont profilées avec une géométrie adaptée à chaque application et sont obtenues grâce à des opérations de coupe, ou découpe, à partir de planches en continu en matériau élastomère microcellulaire, ces planches présentant des caractéristiques élastiques variées et qui offrent une large gamme de rigidités, et il existe des cloisons métalliques qui sont intercalées entre certaines planches ou toutes les planches qui sont contiguës aux pièces horizontales et/ou verticales. Les plaques en continu sont composées d'un matériau élastomère microcellulaire qui est capable de se comprimer en volume même lorsqu'il est enfermé dans une cavité fermée, ce qui permet un déplacement de la masse qui se traduit par la possibilité d'obtenir de grandes élasticités, ou rigidités, avec lesquelles on obtient finalement l'absorption des vibrations. Par ailleurs, contrairement à la réalisation actuelle obtenue par moulage de la masse élastique (2), l'obtention des formes géométriques par découpe permet, premièrement, de l'adapter facilement à une gamme plus large de configurations des supports anti-vibratoires et, deuxièmement, de manière tout aussi importante, cela peut être réalisé grâce à une coupe au jet d'eau ou par découpe, procédés qui permettent d'obtenir une meilleure productivité et qui ne nécessitent pas la confection préalable d'un moule coûteux d'injection ou pour autoclave.

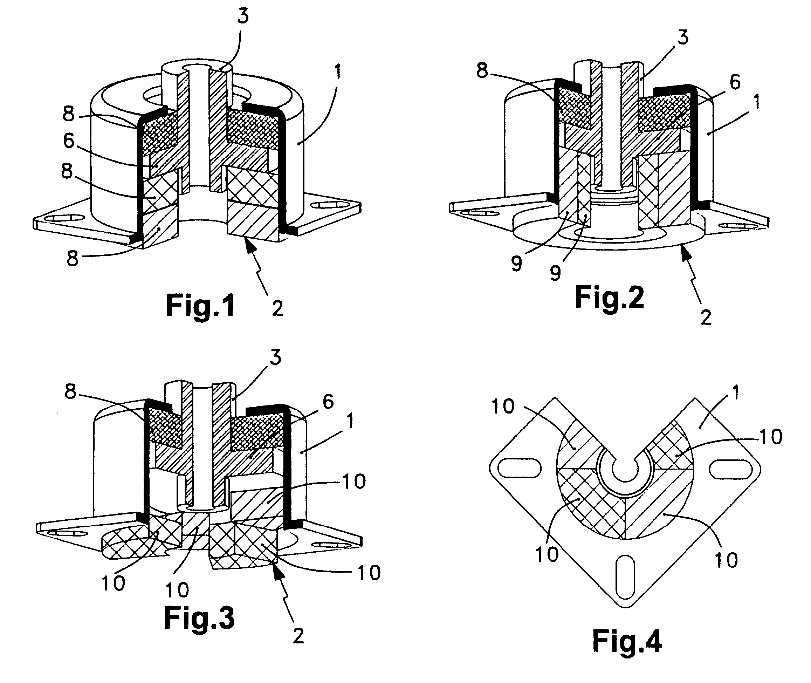

Un mode de réalisation préféré qui représente clairement l'invention est celui de la figure 1 et concerne une forme de support métallique (1) en forme de cuvette cylindrique qui est très usuel pour des supports de machines et des moteurs. Ce mode de réalisation est caractérisé en ce que lesdites pièces horizontales et/ou verticales sont des plaques annulaires (8) de différentes rigidités qui, en formant une ou plusieurs couches, sont montées entre une paroi cylindrique de ce support métallique (1) et un noyau métallique creux (3) qui est également cylindrique ; concrètement, ce sont trois couches de plaques annulaires qui ont chacune une rigidité différente. Un autre mode de réalisation est celui représenté sur la figure 2, dans lequel lesdites pièces horizontales et/ou verticales sont des anneaux concentriques (9) de rigidités différentes qui, en formant une ou plusieurs couches, sont installés successivement entre une paroi cylindrique de ce support métallique (1) et un noyau métallique creux (3) qui est également cylindrique ; dans ce cas, il y a deux couches, l'une formée par deux de ces anneaux concentriques (9), chacun d'eux présentant une rigidité différente, l'autre formée par une plaque annulaire (8) qui présente une rigidité différente des rigidités antérieures. Un autre mode de réalisation préféré est celui représenté sur la figure 3, dans lequel lesdites pièces horizontales et/ou verticales sont des secteurs annulaires (10) de différentes rigidités qui sont installés en formant une ou plusieurs couches entre une paroi cylindrique d'un support métallique (1) en forme de cuvette et un noyau métallique creux (3) qui est également cylindrique ; dans ce cas, il y a deux couches, l'une formée à la base de ces secteurs annulaires (10) en combinant des rigidités différentes les unes des autres, l'autre formée par une plaque annulaire (8) avec une rigidité différente des autres ; la figure 4 montre à titre d'exemple une vue de face de la couche formée à la base de ces secteurs annulaires (10).

Ces modes de réalisation donnent une idée précise des nombreuses possibilités qu'offre l'invention. Ainsi, le fait d'utiliser des couches de plaques annulaires (8) avec des rigidités différentes permet d'obtenir, à l'intérieur d'une même direction de travail, une réponse anti-vibratoire différente dans le sens aller et dans le sens retour ; il est également possible que l'absorption des vibrations soit progressive en fonction de l'intensité reçue par la masse élastique (2) à chaque instant. D'autre part, l'utilisation d'anneaux concentriques (9) permet d'obtenir un comportement spécifiquement destiné à l'absorption des vibrations produites radialement par rapport au support métallique (1).

Le mode de réalisation qui est représenté sur la figure 1, qui concerne l'utilisation des secteurs annulaires (10) mérite une mention spéciale, du fait qu'il permet d'obtenir une réponse anti-vibratoire différente dans des différentes directions radiales du support métallique (1) en fonction des rigidités différentes utilisées pour lesdits secteurs annulaires (10).

Selon un autre objet de la présente invention, ledit noyau métallique (3) forme, au moins, une cloison transversale (6) qui s'étend entre deux couches de matériau élastomère microcellulaire, chacune d'elles en forme de plaques annulaires (8), d'anneaux concentriques (9), de secteurs annulaires (10), ou d'une possible combinaison de ces différents éléments. Cela peut être observé sur les figures 1 à 3 et 5.

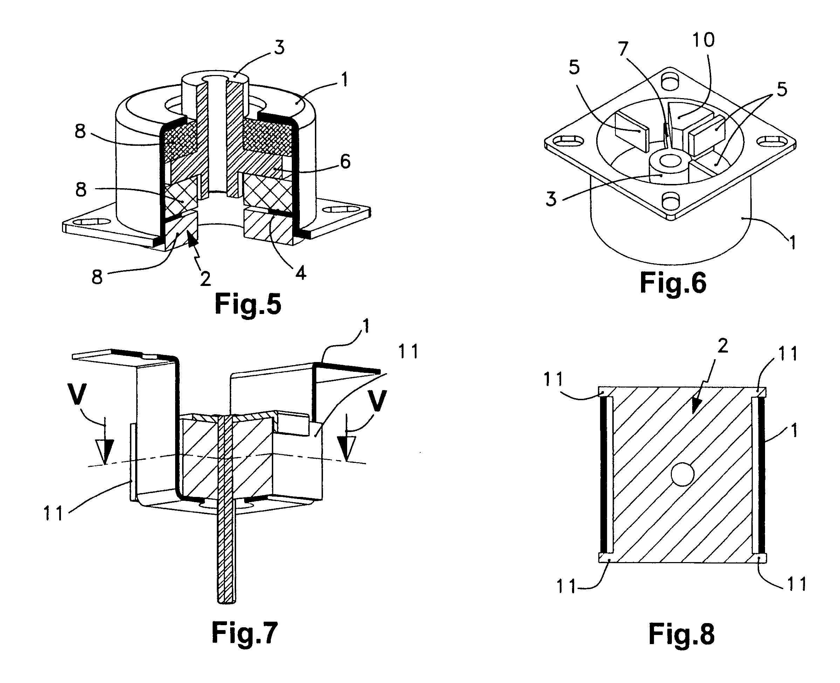

De la même manière, ledit support métallique (1) forme, au moins, une cloison transversale (4) qui s'étend entre deux couches de matériau élastomère microcellulaire, chacune d'elles présentant une forme de plaques annulaires (8), d'anneaux concentriques (9), de secteurs annulaires (10), ou d'une possible combinaison de ces différents éléments. Cette solution est représentée sur la figure 5, sur laquelle une cloison transversale (4) du support métallique (1) se combine avec une cloison transversale (6) du noyau métallique (3) afin qu'elles soient intercalées entre les trois couches de plaques annulaires (8).

Un autre objet de la présente invention est caractérisé en ce que le noyau métallique (3) forme, au moins, une cloison radiale (7) qui s'étend entre deux desdits secteurs annulaires (10) successifs. De la même manière, selon l'invention, le support métallique (1) forme, au moins, une cloison radiale (5) qui s'étend entre deux desdits secteurs annulaires (10) successifs. Ces solutions sont représentées sur la figure 6 et permettent d'obtenir des propriétés très intéressantes, c'est à dire un comportement anti-vibratoire même lors de contraintes de torsion, c'est-à-dire selon un axe de rotation.

L'invention peut être appliquée de la même manière pour des fourches habituelles pour le support de faux-plafonds. A titre illustratif, les figures 7 et 8 représentent un exemple de support en forme de fourche. Selon cet exemple la masse élastique (2) d'une ou plusieurs couches est emboîtée avec un ajustement glissant dans les côtés fermés du contour de la fourche, et en même temps, des deux côtés ouverts de celle-ci, la masse élastique (2) se prolonge pour former des ailettes (11) qui s'appuient, avec un ajustement glissant, sur les arêtes verticales desdits côtés fermés de la fourche. Dans cet exemple n'entrant pas dans la portée de la revendication 1, la masse élastique (2) est formée par une seule couche équivalente à une plaque annulaire (8), mais de forme prismatique, qui est guidé d'une manière opérationnelle grâce à la tige centrale du support du faux-plafond et grâce auxdites ailettes (11).

## Revendications

1. Dispositif de support, anti-vibratoire, comprenant une structure métallique rigide, ou support métallique (1), et une masse élastique (2) qui est placée dans ce support métallique (1) et qui présente une capacité d'absorption des vibrations, ladite masse élastique (2) présentant un trou central traversant et étant composée de plusieurs pièces, **caractérisé en ce que** ledit support métallique (1) présente des moyens permettant de l'ancrer dans un sol ou dans un toit, **en ce que** ladite masse élastique (2) est composée de plusieurs pièces horizontales et/ou verticales qui sont profilées avec une géométrie adaptée à chaque application et qui sont obtenues grâce à des opérations de coupe ou de découpe à partir de planches en continu en matériau élastomère microcellulaire, ces planches présentant des caractéristiques élastiques variées et offrant une large gamme de rigidités, et **en ce que** des cloisons métalliques sont intercalées entre certaines pièces horizontales et/ou verticales.

2. Dispositif de support, anti-vibratoire, selon la revendication 1, **caractérisé en ce que** ledit support métallique (1) a la forme d'une cuvette cylindrique, et **en ce que** certaines pièces horizontales et/ou verticales sont des plaques annulaires (8) de différentes rigidités qui, en formant une ou plusieurs couches, sont montées entre une paroi cylindrique du support métallique (1) et un noyau métallique creux (3) qui est également cylindrique.

3. Dispositif de support, anti-vibratoire, selon la revendication 1 ou 2, **caractérisé en ce que** ledit support métallique (1) a la forme d'une cuvette cylindrique, et **en ce que** certaines pièces horizontales et/ou verticales sont des anneaux concentriques (9) de différentes rigidités qui, en formant une ou plusieurs couches, sont installés successivement entre une paroi cylindrique du support métallique (1) et un noyau métallique creux (3) qui est également cylindrique.

4. Dispositif de support, anti-vibratoire, selon l'une quelconque des revendications 1 à 3, **caractérisé en ce que** ledit support métallique (1) a la forme d'une cuvette cylindrique, et **en ce que** certaines pièces horizontales et/ou verticales sont des secteurs annulaires (10) de différentes rigidités qui sont installés en formant une ou plusieurs couches entre une paroi cylindrique du support métallique (1) et un noyau métallique creux (3) qui est également cylindrique.

5. Dispositif de support, anti-vibratoire, selon l'une quelconque des revendications 2 à 4, **caractérisé en ce que** le noyau métallique (3) forme, au moins, une cloison transversale (6) qui s'étend entre deux couches de matériau élastomère, chacune d'elles en forme de plaques annulaires (8), ou d'anneaux concentriques (9), ou de secteurs annulaires (10), ou d'une possible combinaison de ces différents éléments.

6. Dispositif de support, anti-vibratoire, selon l'une quelconque des revendications 2 à 5, **caractérisé en ce que** le support métallique (1) forme, au moins, une cloison transversale (4) qui s'étend entre deux couches de matériau élastomère, chacune d'elles en forme de plaques annulaires (8), ou d'anneaux concentriques (9), ou de secteurs annulaires (10), ou d'une possible combinaison de ces différents éléments.

7. Dispositif de support, anti-vibratoire, selon la revendication 4 et l'une quelconque des revendications 1 à 6, **caractérisé en ce que** le noyau métallique (3) forme, au moins, une cloison radiale (7) qui s'étend entre deux desdits secteurs annulaires (10) successifs.

8. Dispositif de support, anti-vibratoire, selon la revendication 4 et l'une quelconque des revendications 1 à 7, **caractérisé en ce que** le support métallique (1) forme, au moins, une cloison radiale (5) qui s'étend entre deux desdits secteurs annulaires (10) successifs.

9. Dispositif de support, anti-vibratoire, selon la revendication 1, **caractérisé en ce que** ledit support métallique (1) est en forme de fourche, comme ceux utilisés pour soutenir des faux-plafonds, la masse élastique (2) étant emboîtée avec un ajustement glissant entre les côtés fermés du contour de la fourche, et en même temps, par les deux côtés ouverts de celle-ci, la masse élastique (2) se prolongeant pour former des ailettes (11) qui s'appuient avec un ajustement glissant sur les arêtes verticales desdits côtés fermés de la fourché.

## Claims

1. Device for producing anti-vibration mounts comprising a rigid metal structure, or metal support (1), and an elastic mass (2) that is placed in this metal support (1) and is capable of absorbing vibrations, said elastic mass (2) having a central through hole and consisting of several parts, **characterised in that** said metal support (1) has means that enable it to be anchored in a floor or in a roof, **in that** said elastic mass (2) consists of several horizontal and/or vertical parts that are profiled with a geometry adapted to each application and are obtained by means of cutting or cutting-out operations on the basis of continuous plates made of microcellular elastomeric material, these plates having varying elastic characteristics and providing a wide range of stiffnesses, and **in that** metal partitions are inserted between specific horizontal and/or vertical parts.

2. Device for producing anti-vibration mounts according to claim 1, **characterised in that** said metal support (1) is shaped like a cylindrical cup, and **in that** some horizontal and/or vertical parts are annular plates (8) of different stiffnesses that, forming one or more layers, are mounted between a cylindrical wall of the metal support (1) and a hollow metal core (3) that is also cylindrical.

3. Device for producing anti-vibration mounts according to claim 1 or 2, **characterised in that** said metal support (1) is shaped like a cylindrical cup, and **in that** some horizontal and/or vertical parts are concentric rings (9) with different stiffnesses that, forming one or more layers, are successively installed between a cylindrical wall of the metal support (1) and a hollow metal core (3) that is also cylindrical.

4. Device for producing anti-vibration mounts according to any one of claims 1 to 3, **characterised in that** said metal support (1) is shaped like a cylindrical cup, and **in that** some horizontal and/or vertical parts are annular sectors (10) of different stiffnesses that are installed forming one or more layers between a cylindrical wall of the metal support (1) and a hollow metal core (3) that is also cylindrical.

5. Device for producing anti-vibration mounts according to any one of claims 2 to 4, **characterised in that** the hollow metal core (3) forms at least one transverse partition (6) that extends between two layers of elastomeric material, each one in the form of annular plates (8) or concentric rings (9) or annular sectors (10) or a possible combination of these various elements.

6. Device for producing anti-vibration mounts according to any one of claims 2 to 5, **characterised in that** the metal support (1) forms at least one transverse partition (4) that extends between two layers of elastomeric material, each one in the form of annular plates (8) or concentric rings (9) or annular sectors (10) or a possible combination of these various elements.

7. Device for producing anti-vibration mounts according to claim 4 and any one of claims 1 to 6, **characterised in that** the metal core (3) forms at least one radial partition (7) that extends between two of said successive annular sectors (10).

8. Device for producing anti-vibration mounts according to claim 4 and any one of claims 1 to 7, **characterised in that** the metal support (1) forms at least one radial partition (5) that extends between two of said successive annular sectors (10).

9. Device for producing anti-vibration mounts according to claim 1, **characterised in that** said metal support (1) is fork-shaped, like those used to support false ceilings, the elastic mass (2) being interlocked with a slide fit between the closed sides of the contour of the fork and, at the same time, by the two open sides thereof, the elastic mass (2) extending to form fins (11) that press with a slide fit against the vertical edges of said closed sides of the fork.

## Patentansprüche

1. Antischwingungsauflageeinrichtung, die eine steife Metallstruktur oder Metallauflage (1) und eine elastische Masse (2) umfasst und eine Schwingungsabsorbtionkapazität aufweist, wobei die elastische Masse (2) eine durchgehende zentrale Öffnung umfasst und aus mehreren Teilen besteht, **dadurch gekennzeichnet, dass** die Metallauflage (1) Mittel umfasst, die ein Festsetzen in einem Boden oder in einem Dach ermöglichen, wobei die elastische Masse (2) aus mehreren horizontalen und/oder vertikalen Teilen besteht, die mit einer zu jeder Anwendung angepassten Geometrie profiliert sind und die dank Ausschnitt oder Formschnitt von ununterbrochenen microzellularen Elastomer Planken erhalten werden, wobei diese Planken verschiedene elastische Eigenschaften aufweisen und eine breite Palette von Steifheiten darbieten, und dass metallische Trennwände zwischen bestimmten horizontalen und/oder vertikalen Teilen eingefügt sind.

2. Antischwingungsauflageeinrichtung nach Anspruch 1, **dadurch gekennzeichnet, dass** die Metallauflage (1) die From eines zylinderförmigen Bassins hat und bestimmte horizontale und/oder vertikale Teile ringförmige Platten (8) mit verschiedenen Starrheiten sind, die eine oder mehrere Schichten bilden und die zwischen einer zylinderförmigen Wand der Metallauflage (1) und einem metallischen Kernkreuz (3), welches auch zylinderförmig ist, zusammengesetzt sind.

3. Antischwingungsauflageeinrichtung nach Anspruch 1 oder 2, **dadurch gekennzeichnet, dass** die Metallauflage (1) die From eines zylinderförmigen Bassins hat und dass bestimmte horizontale und/oder vertikale Teile konzentrische Ringe (9) mit verschiedenen Starrheiten sind, die eine oder mehrere Schichten bilden und die hintereinander zwischen einer zylinderförmigen Wand der Metallauflage (1) und einem metallischen Kernkreuz (3), welches auch zylinderförmig ist, zusammengesetzt sind.

4. Antischwingungsauflageeinrichtung nach irgend einer der Ansprüche 1 bis 3, **dadurch gekennzeichnet, dass** die Metallauflage (1) die From eines zylinderförmigen Bassins hat und dass bestimmte horizontale und/oder vertikale Teile ringförmigen Sektoren (10) von verschiedenen Starrheiten sind, die eine oder mehrere Schichten zwischen einer zylinderförmigen Wand der Metallauflage (1) und einem metallischen Kernkreuz (3) bilden, welches auch zylinderförmig ist, zusammengesetzt sind.

5. Antischwingungsauflageeinrichtung nach irgend einer der Ansprüche 2 bis 4, **dadurch gekennzeichnet, dass** der Metallkern (3) mindestens eine querliegende Wand (6) bildet, die sich zwischen zwei von elastomeren Materialschichten erstreckt, wobei jeder von denen in der Form von ringförmigen Platten (8) oder konzentrischen Ringen (9) oder ringförmigen Sektoren oder einer deren möglischen Kombinationen vorliegt.

6. Antischwingungsauflageeinrichtung nach irgend einer der Ansprüche 2 bis 5, **dadurch gekennzeichnet, dass** die Metallauflage (1) mindestens eine querliegende Wand (4) bildet, welche sich zwischen zwei Schichten von elastomeren Material erstreckt, wobei jeder von denen in der Form von ringförmigen Platten (8) oder konzentrischen Ringen (9) oder ringförmigen Sektoren oder einer deren möglischen Kombinationen vorliegt.

7. Antischwingungsauflageeinrichtung nach Anspruch 4 und irgendeinem der Ansprüche 1 bis 6, **dadurch gekennzeichnet, dass** der Metallkern (3) mindestens eine radiale Wand (7) bildet, welche sich zwischen zwei der erwähnten aufeinanderfolgenden ringförmigen Sektoren (10) erstreckt.

8. Antischwingungsauflageeinrichtung nach Anspruch 4 und irgendeinem der Ansprüche 1 bis 7, **dadurch gekennzeichnet, dass** die Metallauflage (1) mindestens eine radiale Wand (5) bildet, welche sich zwischen zwei der erwähnten aufeinanderfolgenden ringförmigen Sektoren (10) erstreckt.

9. Antischwingungsauflageeinrichtung nach Anspruch 1, **dadurch gekennzeichnet, dass** die Metallauflage (1) in der Form einer Gabel vorliegt, wie solche die um Zwischendecken zu unterstützen verwendet werden, wobei die elastische Masse (2) mit einer gleitenden Anpassung zwischen den geschlossenen Seiten der Kontur der Gabel eingefügt wird, und gleichzeitig durch die beiden offenen Seiten derselben, wobei die elastische Masse (2) sich zur Bildung von Flügeln (11) verlängert, die sich bei einer gleitenden Anpassung auf den vertikalen Rändern der erwähnten geschlossenen Seiten der Gabel stützen.
